# EUROPEAN PATENT APPLICATION

(11) **EP 4 319 025 A1**
(43) Date of publication of application: **07.02.2024**
(21) Application number: 22806576.9
(22) Date of filing: 05.05.2022
(51) Int. Cl.: H04L 5/00, H04W 72/04

(54) **METHOD AND APPARATUS FOR TRANSMITTING CONTROL INFORMATION**

(30) Priority: 10.05.2021 CN 202110507818
(71) Applicant: Huawei Technologies Co., Ltd., Longgang Shenzhen, Guangdong 518129 (CN)
(72) Inventor: YU, Yawei, Shenzhen, Guangdong 518129 (CN); LU, Shaozhong, Shenzhen, Guangdong 518129 (CN); GUO, Zhiheng, Shenzhen, Guangdong 518129 (CN); XIE, Xinqian, Shenzhen, Guangdong 518129 (CN)
(74) Representative: Gill Jennings & Every LLP
(86) International application number: PCT/CN2022/090892
(87) International publication number: WO 2022/237608

(57) **Abstract**

This application provides a method for transmitting control information and an apparatus. The method includes: When a time domain resource for transmitting first control information on a first PUCCH conflicts in a first time unit with a time domain resource for transmitting a first transport block on a first PUSCH, a terminal device determines, based on a relationship between a payload size of the first control information and a first threshold, a first time domain resource for transmitting the first control information. The first threshold is a maximum quantity of bits of the first control information that can be sent by the terminal device in the first time unit without generating a first result. The first result is that some information bits in the first transport block cannot be transmitted. The terminal device transmits the first control information on the first time domain resource. By using the method, impact of the first control information on transmission of the information bits in the first transport block can be reduced, so that all information bits in a transport block can be transmitted, and transmission performance of the transport block on a PUSCH can be better ensured.

## Description

This application claims priority to Chinese Patent Application No. 202110507818.2, filed with the China National Intellectual Property Administration on May 10, 2021 and entitled "METHOD FOR TRANSMITTING CONTROL INFORMATION AND APPARATUS", which is incorporated herein by reference in its entirety.

### TECHNICAL FIELD

This application relates to the field of communication technologies, and more specifically, to a method for transmitting control information and an apparatus.

### BACKGROUND

In current new radio (new radio, NR) standard discussions, one transport block (transport block, TB) can be sent in a plurality of slots. A TB is usually carried on a physical uplink shared channel (physical uplink shared channel, PUSCH). Uplink control information (uplink control information, UCI) is usually carried on a physical uplink control channel (physical uplink control channel, PUCCH). However, there is a case in which a time domain resource for transmitting a TB on the PUSCH conflicts with a time domain resource for transmitting a piece of UCI on the PUCCH. In this case, transmission of the TB may be affected by the UCI. Therefore, in a case in which one TB is sent in a plurality of slots, when a time domain resource conflict occurs between the PUSCH and the PUCCH, how to transmit the uplink control information to ensure transmission of the TB is an urgent problem to be resolved.

### SUMMARY

This application provides a method for transmitting control information and an apparatus.

According to a first aspect, a method for transmitting control information is provided. The method may be performed by a terminal device, may be performed by a chip used in the terminal device, or may be performed by a unit or a module configured to perform a corresponding function in the terminal device. The following uses an example in which the method is performed by a terminal device for description. The method includes: when a time domain resource for transmitting first control information on a first uplink control channel PUCCH conflicts in a first time unit with a time domain resource for transmitting a first transport block on a first uplink shared channel PUSCH, determining, based on a relationship between a payload size of the first control information and a first threshold, a first time domain resource for transmitting the first control information, where the first threshold is a maximum quantity of bits of the first control information that can be sent by the terminal device in the first time unit of the first PUSCH without generating a first result, and the first result is that some information bits in the first transport block cannot be transmitted; and transmitting the first control information on the first time domain resource of the first PUSCH.

According to the solution of this application, when the time domain resource for transmitting the first control information conflicts with the time domain resource for transmitting the first transport block, the terminal device determines the relationship between the first control information and the first threshold, and determines, based on a determined result, the first time domain resource for transmitting the first control information, so that impact of the first control information on transmission of information bits in the first transport block can be reduced to the greatest extent, and the first transport block can be better transmitted.

With reference to the first aspect, in some implementations of the first aspect, when the payload size of the first control information is less than or equal to the first threshold, the first time domain resource is the first time unit.

With reference to the first aspect, in some implementations of the first aspect, when the payload size of the first control information is greater than the first threshold, and the payload size of the first control information is less than or equal to a second threshold, the first time domain resource is a second time unit. The second time unit is a time unit after the first time unit. The second threshold is a maximum quantity of bits of the first control information that can be sent by the terminal device in the second time unit of the first PUSCH without generating the first result.

According to the solution of this application, when the time domain resource for transmitting the first control information conflicts with the time domain resource for transmitting the first transport block, the terminal device may delay sending the first control information, so that transmission of information bits in the first transport block is not affected.

With reference to the first aspect, in some implementations of the first aspect, when the payload size of the first control information is greater than the first threshold, the first time domain resource is N time units of the first PUSCH. N is a positive integer greater than or equal to 2. Each of the N time units is used for transmitting a part of the first control information, and the first result is not generated when the terminal device transmits the first control information in the N time units of the first PUSCH.

When the payload size of the first control information is greater than the first threshold, the terminal device determines N thresholds. The N thresholds correspond to the N time units. Each of the N thresholds is a maximum quantity of bits of the first control information that can be sent by the terminal device by multiplexing a corresponding time unit on the first PUSCH without generating the first result. N is a positive integer greater than or equal to 2. The terminal device divides the first control information into N parts based on the N thresholds. The N parts are in a one-to-one correspondence with the N time units, and each of the N parts is less than or equal to a threshold of the corresponding time unit. The terminal device determines that the first time domain resource is the N time units of the first PUSCH.

According to the solution of this application, when the time domain resource for transmitting the first control information conflicts with the time domain resource for transmitting the first transport block, the terminal device may divide the first control information into a plurality of parts, and send the plurality of parts in a plurality of time units, so that transmission of information bits in the first transport block is not affected.

With reference to the first aspect, in some implementations of the first aspect, when the payload size of the first control information is greater than the first threshold, and the first control information includes first-type control information and second-type control information, in a possible implementation, the first time domain resource is the first time unit, and the first time unit is a time domain resource for transmitting the first-type control information, and the method further includes: discarding the second-type control information.

Alternatively, when a payload size of the second-type control information is less than or equal to a second threshold, the first time domain resource is the first time unit and a second time unit, a time domain resource for transmitting the first-type control information is the first time unit, a time domain resource for transmitting the second-type control information is the second time unit. The second time unit is a time unit after the first time unit. The second threshold is a maximum quantity of bits of the first control information that can be sent by the terminal device in the second time unit of the first PUSCH without generating the first result.

Alternatively, the first time domain resource is the first time unit and N time units, a time domain resource for transmitting the first-type control information is the first time unit, a time domain resource for transmitting the second-type control information is the N time units. N is a positive integer greater than or equal to 2. Each of the N time units is used for transmitting a part of the second-type control information, and the first result is not generated when the terminal device transmits the second-type control information in the N time units of the first PUSCH.

The first-type control information includes at least one of hybrid automatic repeat request-acknowledgement/negative acknowledgement HARQ-ACK/NACK information and scheduling request SR information. The second-type control information includes channel state information CSI.

According to the solution of this application, when the time domain resource for transmitting the first control information conflicts with the time domain resource for transmitting the first transport block, and the first control information includes the first-type control information and the second-type control information, the terminal device sends the first-type control information by occupying the conflicting time domain resource. The terminal device may discard or delay sending the second-type control information, or divide the second-type control information into a plurality of parts for sending in a plurality of time units, to reduce impact on transmission of information bits in the first transport block to the greatest extent.

With reference to the first aspect, in some implementations of the first aspect, a value of N is associated with one or more of the following parameters: a quantity of time units for transmitting the first transport block on the first PUSCH and a maximum latency for transmitting the first control information.

With reference to the first aspect, in some implementations of the first aspect, when the payload size of the first control information is greater than the first threshold, and a time domain resource for transmitting the second control information on the first PUSCH conflicts in a second time unit with a time domain resource for transmitting the first control information on the first PUSCH, the determining a first time domain resource for transmitting the first control information includes:
when a sum of the payload size of the first control information and a payload size of the second control information is less than or equal to a second threshold, determining that the first time domain resource is the second time unit, where the second time unit is a time unit after the first time unit; and
when the sum of the payload size of the first control information and the payload size of the second control information is greater than the second threshold, discarding the first control information.

The second threshold is a maximum quantity of bits of the first control information that can be sent by the terminal device in the second time unit of the first PUSCH without generating the first result.

It should be understood that when the payload size of the first control information is greater than the first threshold, and the second control information is multiplexed in the second time unit, according to the solution of this application, the terminal device may determine transmission mechanisms of the first control information and the second control information, to avoid transmission disorder of the first control information and the second control information.

With reference to the first aspect, in some implementations of the first aspect, when the payload size of the first control information is greater than the first threshold, a time domain resource for transmitting the second control information on the first PUSCH conflicts in a second time unit with a time domain resource for transmitting the first control information on the first PUSCH, and the first control information includes first-type control information and second-type control information, the determining a first time domain resource for transmitting the first control information includes:
determining that the first time unit is a time domain resource for transmitting the first-type control information;
when a sum of a payload size of the second-type control information and a payload size of the second control information is less than or equal to a second threshold, determining that the second time unit is a time domain resource for transmitting the second-type control information, where the second time unit is a time unit after the first time unit; and
when the sum of the payload size of the second-type control information and the payload size of the second control information is greater than the second threshold, discarding the second-type control information by the terminal device.

The second threshold is a maximum quantity of bits of the first control information that can be sent by the terminal device in the second time unit of the first PUSCH without generating the first result. The first-type control information includes at least one of hybrid automatic repeat request-acknowledgement/negative acknowledgement HARQ-ACK/NACK information and scheduling request SR information. The second-type control information includes channel state information CSI.

It should be understood that, when a size of the first control information is greater than the first threshold, the second control information is multiplexed in the second time unit, and the first control information includes the first-type control information and the second-type control information, according to the solution of this application, the terminal device may determine transmission mechanisms of the first-type control information, the second-type control information, and the second control information, to avoid transmission disorder.

According to a second aspect, a method for receiving control information is provided. The method may be performed by a network device, may be a chip used in the network device, or may be a unit or module configured to perform a corresponding function in the network device. The following uses an example in which the method is performed by a network device for description. The method includes: when a time domain resource that is on a first uplink control channel PUCCH and that carries first control information conflicts in a first time unit with a time domain resource that is on a first uplink shared channel PUSCH and that carries a first transport block, determining, based on a relationship between a payload size of the first control information and a first threshold, a first time domain resource that is on the first PUSCH and that carries the first control information, where the first threshold is a maximum quantity of bits of the first control information that can be sent by a terminal device in the first time unit of the first PUSCH without generating a first result, and the first result is that some information bits in the first transport block cannot be transmitted; and receiving the first control information on the first time domain resource.

That some information bits in the first transport block cannot be transmitted may be understood as: When some time domain resources in the first transport block are used for transmitting bits of the first control information, an information bit string that can be transmitted by using a remaining resource used for transmitting the first transport block in the first PUSCH cannot cover a first location in a bit string after channel coding. The first location is a candidate start location of to-be-transmitted bits selected by performing rate matching in the bit string after channel coding. The first location is a next candidate start location of the information bit string after a candidate start location of a bit transmission string after channel coding. The candidate location is predefined by a transmit end and a receive end.

According to the solution of this application, when the time domain resource that is on the first PUCCH and that carries the first control information conflicts in the first time unit with the time domain resource that is on the first PUSCH and that carries the first transport block, the network device determines a relationship between the payload size of the first control information and the first threshold, and determines, based on a determined result, a first time domain resource that carries the first control information, so that the first control information sent by the terminal device can be correctly received.

With reference to the second aspect, in some implementations of the second aspect, when the payload size of the first control information is less than or equal to a first threshold, the first time domain resource is the first time unit.

With reference to the second aspect, in some implementations of the second aspect, when the payload size of the first control information is greater than the first threshold, and the payload size of the first control information is less than or equal to a second threshold, the first time domain resource is a second time unit. The second time unit is a time unit after the first time unit. The second threshold is a maximum quantity of bits of the first control information that can be sent by the terminal device in the second time unit of the first PUSCH without generating the first result.

According to the solution of this application, when the payload size of the first control information is greater than the first threshold, and the payload size of the first control information is less than or equal to the second threshold, the network device uses a mechanism the same as that of the terminal device to determine that the time domain resource carrying the first control information is the second time unit, so that the first control information can be correctly received.

With reference to the second aspect, in some implementations of the second aspect, when the payload size of the first control information is greater than the first threshold, the first time domain resource is N time units of the first PUSCH. N is a positive integer greater than or equal to 2. Each of the N time units is used for carrying a part of the first control information, and the first result is not generated when the terminal device transmits the first control information in the N time units of the first PUSCH.

When the payload size of the first control information is greater than the first threshold, the network device determines N thresholds. The N thresholds correspond to the N time units. Each of the N thresholds is a maximum quantity of bits of the first control information that can be sent by the terminal device by multiplexing a corresponding time unit on the first PUSCH without generating the first result. N is a positive integer greater than or equal to 2. The network device divides the first control information into N parts based on the N thresholds. The N parts are in a one-to-one correspondence with the N time units. Each of the N parts is less than or equal to a threshold of the corresponding time unit. The network device determines that the first time domain resource is the N time units.

According to the solution of this application, when the payload size of the first control information is greater than the first threshold, the network device may use the mechanism the same as that of the terminal device to determine that the time domain resource carrying the first control information is the N time units, so that the first control information can be correctly received.

With reference to the second aspect, in some implementations of the second aspect, when the payload size of the first control information is greater than the first threshold, and the first control information includes first-type control information and second-type control information, in a possible implementation, the first time domain resource is the first time unit, the first time unit is a time domain resource carrying the first-type control information, and the method further includes: determining that a time domain resource carrying the second-type control information does not exist.

Alternatively, when a payload size of the second-type control information is less than or equal to a second threshold, the first time domain resource is the first time unit and a second time unit, the time domain resource carrying the first-type control information is the first time unit, and the time domain resource carrying the second-type control information is the second time unit. The second time unit is a time unit after the first time unit. The second threshold is a maximum quantity of bits of the first control information that can be sent by the terminal device in the second time unit of the first PUSCH without generating the first result.

Alternatively, the first time domain resource is the first time unit and N time units, the first time unit is a time domain resource carrying first-type control information, and the N time units are time domain resources carrying the second-type control information. N is a positive integer greater than or equal to 2. Each of the N time units is used for carrying a part of the second-type control information, and the first result is not generated when the terminal device transmits the second-type control information in the N time units of the first PUSCH.

The first-type control information includes at least one of hybrid automatic repeat request-acknowledgement/negative acknowledgement HARQ-ACK/NACK information and scheduling request SR information. The second-type control information includes channel state information CSI.

According to the solution of this application, when the payload size of the first control information is greater than the first threshold, and the first control information includes the first-type control information and the second-type control information, the network device uses a mechanism the same as that of the terminal device to determine the time domain resource carrying the first-type control information and the time domain resource carrying the second-type control information, so that the first control information can be correctly received.

With reference to the second aspect, in some implementations of the second aspect, a value of N is associated with one or more of the following parameters: a quantity of time units for transmitting the first transport block on the first PUSCH and a maximum latency for transmitting the first control information.

With reference to the second aspect, in some implementations of the second aspect, when the payload size of the first control information is greater than the first threshold, and a time domain resource that is on the first PUSCH and that carries second control information conflicts in a second time unit with a time domain resource that is on the first PUSCH and that carries the first control information, the determining a first time domain resource that is on the first PUSCH and that carries the first control information includes:
when a sum of the payload size of the first control information and a payload size of the second control information is less than or equal to a second threshold, determining that the first time domain resource is a second time unit, where the second time unit is a time unit after the first time unit; and
when the sum of the payload size of the first control information and the payload size of the second control information is greater than the second threshold, determining that a time domain resource carrying the first control information does not exist.

The second threshold is a maximum quantity of bits of the first control information that can be sent by the terminal device in the second time unit of the first PUSCH without generating the first result.

With reference to the second aspect, in some implementations of the second aspect, when the payload size of the first control information is greater than the first threshold, a time domain resource that is on the first PUSCH and that carries the second control information conflicts in a second time unit with a time domain resource that is on the first PUSCH and that carries the first control information, and the first control information includes first-type control information and second-type control information, the determining a first time domain resource that is on the first PUSCH and that carries the first control information includes:
determining that the time domain resource carrying the first-type control information is the first time unit;
when a sum of a payload size of the second-type control information and a payload size of the second control information is less than or equal to a second threshold, determining that the time domain resource carrying the second-type control information is the second time unit, where the second time unit is a time unit after the first time unit; and
when the sum of the payload size of the second-type control information and the payload size of the second control information is greater than the second threshold, determining that the time domain resource carrying the second-type control information does not exist.

The second threshold is a maximum quantity of bits of the first control information that can be sent by the terminal device in the second time unit of the first PUSCH without generating the first result. The first-type control information includes at least one of hybrid automatic repeat request-acknowledgement/negative acknowledgement HARQ-ACK/NACK information and scheduling request SR information. The second-type control information includes channel state information CSI.

According to a third aspect, a terminal device is provided. The terminal device includes a unit configured to perform the method in the first aspect or the implementations of the first aspect.

According to a fourth aspect, a network device is provided. The network device includes a unit configured to perform the method in the second aspect or the implementations of the second aspect.

According to a fifth aspect, a communication apparatus is provided, including at least one processor. A memory is configured to store a computer program. When the communication apparatus runs, the processor executes the computer program or instructions stored in the memory, so that the communication apparatus is enabled to perform the method in the first aspect or the implementations of the first aspect. Alternatively, the communication apparatus is enabled to perform the method in the second aspect or the implementations of the second aspect. The memory may be located in the processor, or may be implemented by using a chip independent of the processor. This is not specifically limited in this application.

According to a sixth aspect, a computer-readable storage medium is provided, including a computer program. When the computer program is run on a computer, the computer is enabled to perform the method in the first aspect or the implementations of the first aspect. Alternatively, the computer is enabled to perform the method in the second aspect or the implementations of the second aspect.

According to a seventh aspect, a chip is provided. A processing circuit is disposed on the chip, and the processing circuit is configured to perform the method in the first aspect or the implementations of the first aspect. Alternatively, the processing circuit is configured to perform the method in the second aspect or the implementations of the second aspect.

According to an eighth aspect, a computer program product is provided. The computer program product includes a computer program (which may also be referred to as code or instructions). When the computer program is run, a computer is enabled to perform the method in the first aspect or the implementations of the first aspect. Alternatively, the computer is enabled to perform the method in the second aspect or the implementations of the second aspect.

### BRIEF DESCRIPTION OF DRAWINGS

FIG. 1 shows an architecture of a communication system to which an embodiment of this application is applicable;
FIG. 2 is a schematic interaction diagram of a method according to this application;
FIG. 3 shows an example of applying a method according to this application;
FIG. 4 shows another example of applying a method according to this application;
FIG. 5 is a schematic block diagram of a communication device according to this application; and
FIG. 6 is a schematic block diagram of a communication apparatus according to this application.

### DESCRIPTION OF EMBODIMENTS

The following describes technical solutions of this application with reference to accompanying drawings.

To make embodiments of this application clearer, the following briefly describes some nouns or terms in embodiments of this application. Some nouns or terms are also used as a part of content of the present invention.

### 1: Time unit

A time unit in this embodiment of this application may be an orthogonal frequency division multiplexing (orthogonal frequency division multiplexing, OFDM) symbol, a mini-slot (mini-slot), a slot (slot), a subframe (subframe), a frame (frame), a radio frame (radio frame), a system frame (system frame), a sampling point, a transmission time interval (transmission time interval, TTI), a single carrier symbol (single carrier symbol), a frequency division multiplexing symbol, or the like.

### 2: Control information

Control information in this embodiment of this application may be uplink control information (uplink control information, UCI). The UCI is usually carried on a physical uplink control channel (physical uplink control channel, PUCCH) for sending. The UCI may be classified into first-type control information and second-type control information. The first-type control information is time-insensitive UCI. For example, the first-type control information may be channel state information (channel state information, CSI). The second-type control information is time-sensitive UCI. For example, the second-type control information may be hybrid automatic repeat request (hybrid automatic repeat request, HARQ) acknowledgement (acknowledgement, ACK) information, hybrid automatic repeat request (hybrid automatic repeat request, HARQ) negative acknowledgement (negative acknowledgement, NACK) information, and scheduling request (scheduling request, SR) information.

### 3: Transport block

A transport block in this embodiment of this application may be data obtained after an information bit is processed. Performing processing on the information bit includes at least performing channel coding processing. For example, the channel coding processing may be performed by using a low-density parity-check (low-density parity-check, LDPC) coding scheme. One transport block includes an information bit and a parity bit. A manner of sending one transport block in a plurality of time units may be a multi-redundancy version cycling (multi-redundancy version cycling, RV cycling) manner When a multi-RV cycling manner is used, RV0, RV1, RV2, and RV3 are location points that are in a transport block and that divide the transport block into four approximately equal parts. Data transmitted in different time units is data obtained after a bit sequence of a specific length are selected from different RV start points and mapped.

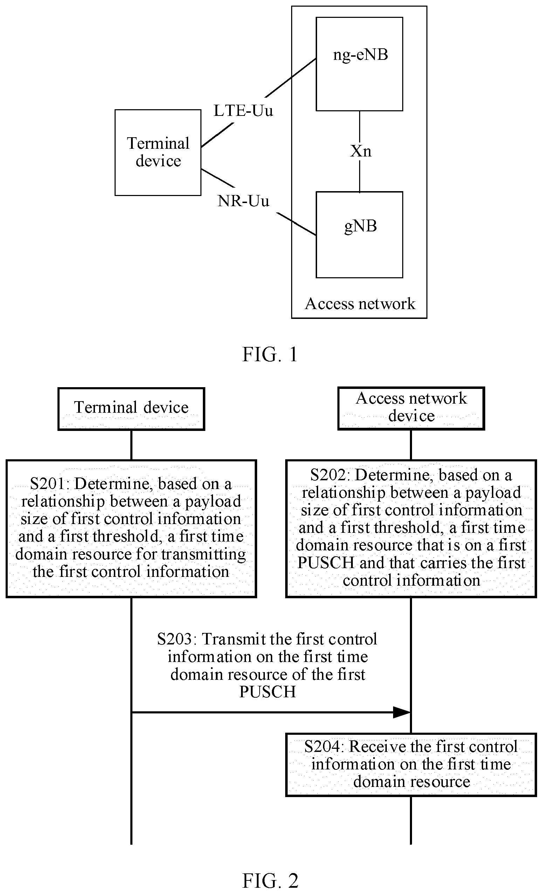

The technical solutions provided in this application may be applied to a system architecture shown in FIG. 1. Included network elements mainly include a terminal device and an access network.

The terminal device in this embodiment of this application may also be referred to as a terminal, is an entity configured to receive or transmit a signal on a user side, and is configured to send an uplink signal to a network device or receive a downlink signal from a network device. The terminal device includes a device that provides a user with voice and/or data connectivity, for example, may include a handheld device having a wireless connection function or a processing device connected to a wireless modem. The terminal device may communicate with a core network through a radio access network (radio access network, RAN), and exchange a voice and/or data with the RAN. The terminal device may include user equipment (user equipment, UE), a V2X terminal device, a wireless terminal device, a mobile terminal device, a device-to-device (device-to-device, D2D) communication terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), a wearable device, a vehicle-mounted device, home appliances, and the like.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

The access network in this embodiment of this application may include one or more access network devices. The access network device may also be referred to as a base station, a RAN node, or a RAN device. The access network device is a network-side entity configured to transmit and/or receive a signal, and serve as a router between the terminal and a remaining part of the access network. The remaining part of the access network may include an IP network and the like. The access network device may further coordinate attribute management of an air interface. For example, the access network device may be an evolved NodeB (evolved NodeB, eNB or eNodeB) in LTE. The eNB is an apparatus, that is deployed in a radio access network, that meets a 4G standard, and that provides a wireless communication function for the terminal. Alternatively, the access network device may be a new radio controller (new radio controller, NR controller), may be a gNodeB (gNB) in a 5G system, may be a central unit (central unit), may be a new radio base station, may be a radio remote module, may be a micro base station (also referred to as a small cell), may be a relay (relay), may be a distributed unit (distributed unit), may be a macro base station in various forms, a transmission measurement function (transmission measurement function, TMF), a transmission point (transmission point, TP), any other radio access device, or a base station in next-generation communication. This is not limited in this embodiment of this application.

The solution provided in this application is applicable to a scenario in which a time domain resource for transmitting first control information on a first PUCCH conflicts in a first time unit with a time domain resource for transmitting a first transport block on a first PUSCH. In this case, the first control information and the first transport block may be sent by using the method provided in this application. In addition, the network device in this application may be an access network device, or may be a unit or module that is in the access network device and that is configured to perform a corresponding function.

It is assumed that a size of a first transport block is 300 bits, and the bits are numbered #1 to #300. The bits numbered #1 to #100 are information bits, and the bits numbered #101 to #300 are parity bits. A time domain resource for transmitting the first transport block is a time unit #1, a time unit #2, a time unit #3, and a time unit #4. A location of an RV 0 may be a location of a bit numbered #1, a location of an RV 1 may be a location of a bit numbered #76, a location of the RV 2 may be a location of a bit numbered #151, and a location of the RV 3 may be a location of a bit numbered #226. The first transport block is sent in an RV cycling 10, 2, 3, 1} manner. Assuming that a maximum quantity of bits that can be carried in each time unit is 100 bits, and assuming that the first time unit is the time unit #1.

When there is no conflict between the time domain resource for transmitting the first control information on the first PUCCH and the time domain resource for transmitting the first transport block on the first PUSCH, the terminal device sends, on the first PUSCH by occupying the time unit #1, information bits numbered #1 to #75 in the first transport block, sends, by occupying the time unit #2, parity bits numbered #151 to #225 in the first transport block, sends, by occupying the time unit #3, parity bits numbered #226 to #300 in the first transport block, and sends, by occupying the time unit #4, bits numbered #76 to #150 in the first transport block. The bits numbered #76 to #100 are information bits, and the bits numbered #101 to #150 are parity bits.

FIG. 2 is a schematic flowchart of a method according to this application. The method may be applied to the communication system shown in FIG. 1. The method includes the following steps.

S201: A terminal device determines, based on a relationship between a payload size of first control information and a first threshold, a first time domain resource for transmitting the first control information.

The first threshold is a maximum quantity of bits of the first control information that can be sent by the terminal device in a time unit #1 of a first PUSCH without generating a first result, and the first result is that some information bits in a first transport block cannot be sent.

It should be understood that, in this application, the "payload size of first control information" refers to a total quantity of bits of the first control information.

It can be learned from the foregoing assumption that, without generating the first result, the maximum quantity of bits of the first control information that can be sent by the terminal device in the time unit #1 of the first PUSCH is 25 bits. In other words, the first threshold is 25 bits.

When the payload size of the first control information is less than or equal to the first threshold, the terminal device determines that the first time domain resource is the time unit #1. In this case, if the first control information is multiplexed in the time unit #1, to be specific, the first control information is sent on the first PUSCH by occupying a part of time domain resources in the time unit #1, the information bits numbered #1 to #75 in the first transport block may still be sent on the first PUSCH by occupying a remaining part of the time unit #1, and the first result is not generated.

For example, the payload size of the first control information is 10 bits. The first control information is multiplexed in the time unit # 1 by the terminal device to send the first control information by occupying a part of the time unit #1. A maximum quantity of bits that can be carried by the terminal device by occupying a remaining part of the time unit #1 is 90 bits. Therefore, the terminal device can send information bits numbered #1 to #75 in the first transport block by occupying the remaining part of the time unit #1, and the first result is not generated.

When the payload size of the first control information is greater than the first threshold, if the first control information is multiplexed in the time unit #1 by the terminal device, the first result is to be generated. In other words, some information bits in the first transport block cannot be sent.

For example, the payload size of the first control information is 50 bits. If the first control information is multiplexed in the time unit #1 by the terminal device, to be specific, the terminal device sends the first control information on the first PUSCH by occupying a part of time domain resources in the time unit #1, because a maximum quantity of bits that can be carried in the time unit #1 is 100 bits, the terminal device may send, on the first PUSCH by occupying a remaining part of the time unit #1, information bits numbered #1 to #50 in the first transport block. In this case, information bits numbered #51 to #75 in the first transport block cannot be sent in the time unit #1 to the time unit #4. That is, in this case, the first result is generated.

The following describes how the terminal device determines the first time domain resource for transmitting the first control information when the payload size of the first control information is greater than the first threshold.

### Manner 1:

The terminal device discards the first control information. To be specific, the terminal device does not send the first control information.

### Manner 2:

Without generating the first result, the terminal device sends a part of the first control information on the first PUSCH by occupying the time unit #1, and discards a remaining part of the first control information.

For example, the payload size of the first control information is 50 bits. Because the first threshold is 25 bits, the terminal device may send, on the first PUSCH by occupying a part of the time unit #1, 25 bits in the first control information or data less than 25 bits in the first control information, and discard data that is in the first control information and that cannot be sent in the first time unit of the first PUSCH.

### Manner 3:

When the payload size of the first control information is less than or equal to a second threshold, the terminal device determines that the first time domain resource is a second time unit. The second time unit is a time unit after the time unit #1. The second threshold is a maximum quantity of bits of the first control information that can be sent by the terminal device in the second time unit of the first PUSCH without generating the first result.

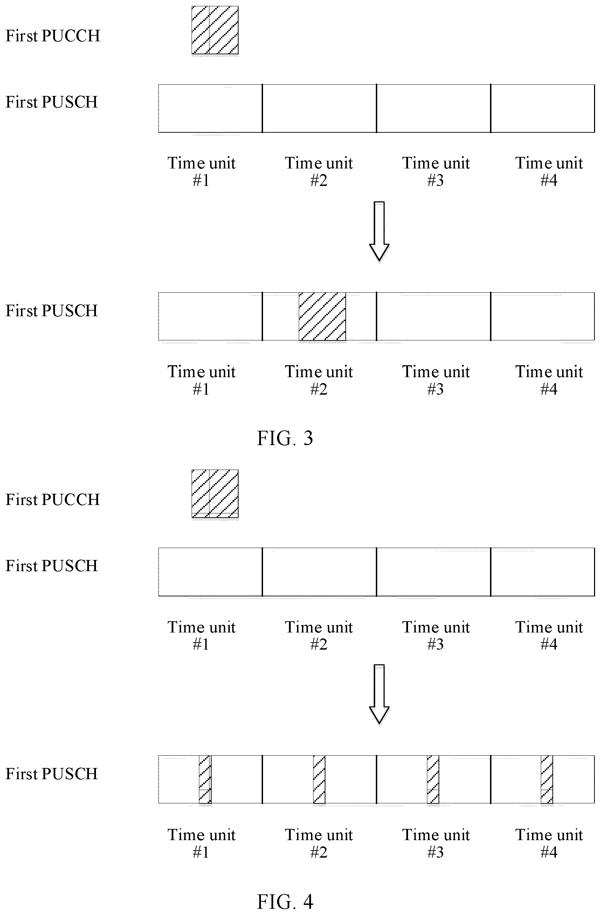

For example, as shown in FIG. 3, when there is no conflict between a time domain resource for transmitting first control information on a first PUCCH and a time domain resource for transmitting a first transport block on a first PUSCH, a terminal device sends, by occupying a time unit #2, parity bits numbered #151 to #225 in a first transport block. Therefore, without generating the first result, a maximum quantity of bits of first control information that can be sent by the terminal device by reusing a time unit #2 on the first PUSCH is 100 bits. If a size of the first control information is 50 bits, and the size of the first control information is less than 100 bits, a second time unit may be a time unit #2. The terminal device determines that a first time domain resource is the time unit #2, sends the first control information by occupying a part of the time unit #2, and sends parity bits numbered #151 to #200 in a first transport block by occupying a remaining part of the time unit #2.

It should be understood that the second time unit may alternatively be another time unit. When any one of a time unit #2 to a time unit #4 cannot be used as the second time unit, the terminal device may discard the first control information.

In a possible implementation, when determining the second time unit, the terminal device may further consider a maximum latency for sending the first control information by the terminal device.

For example, the maximum latency for sending the first control information by the terminal device is two time units. If the time unit #2 cannot be used as the second time unit, the terminal device may discard the first control information.

According to the solution of this application, when a time domain resource for transmitting the first control information conflicts with a time domain resource for transmitting the first transport block, the terminal device may delay sending the first control information, so that transmission of information bits in the first transport block is not affected, thereby ensuring transmission performance.

### Manner 4:

The terminal device determines N thresholds. The N thresholds correspond to N time units. Each of the N thresholds is a maximum quantity of bits of the first control information that can be sent by the terminal device in a time unit corresponding to the first PUSCH without generating the first result. N is a positive integer greater than or equal to 2.

The terminal device divides the first control information into N parts based on the N thresholds. The N parts are in a one-to-one correspondence with the N time units. A size of each of the N parts is less than or equal to a threshold of a corresponding time unit.

The terminal device determines that the first time domain resource is the N time units.

Each of the N time units is used for transmitting a part of the first control information, and the first result is not generated when the terminal device transmits the first control information in the N time units of the first PUSCH. It should be understood that different parts of the first control information are transmitted in each time unit.

A value of N is associated with one or more of the following parameters:
a quantity of time units for transmitting the first transport block on the first PUSCH, and a maximum latency for transmitting the first control information.

Based on the foregoing assumption, the terminal device determines that a threshold #1 corresponding to a time unit #1 is 25 bits, a threshold #2 corresponding to the time unit #2 is 100 bits, a threshold #3 corresponding to a time unit #3 is 100 bits, and a threshold corresponding to a time unit #4 is 75 bits.

For example, as shown in FIG. 4, a payload size of first control information is 60 bits, and N time units may include a time unit #1. A terminal device determines a value of N based on a quantity of time units for transmitting a first transport block on a first PUSCH. For example, N may be 4. In this case, the N time units are a time unit #1 to a time unit #4. The terminal device may evenly divide the first control information into four parts (for example, the four parts may be respectively denoted as first control sub-information #1 to first control sub-information #4). A size of each part is 15 bits, each part corresponds to one time unit, and the size of each part is less than or equal to a threshold of a corresponding time unit. The terminal device determines that the first time domain resource is the N time units. To be specific, the terminal device determines that a time domain resource corresponding to the first control sub-information #1 is the time unit #1, a time domain resource corresponding to the first control sub-information #2 is the time unit #2, a time domain resource corresponding to the first control sub-information #3 is the time unit #3, and a time domain resource corresponding to the first control sub-information #4 is the time unit #4.

For example, the payload size of the first control information is 60 bits, and the N time units may not include the time unit #1. The terminal device determines the value of N based on a quantity of time units for transmitting the first transport block on the first PUSCH. For example, N may be 3. In this case, the N time units are the time unit #2 to the time unit #4. The terminal device may evenly divide the first control information into three parts (for example, the three parts may be respectively denoted as first control sub-information #5 to first control sub-information #7). A size of each part is 20 bits, each part corresponds to one time unit, and the size of each part is less than or equal to a threshold of a corresponding time unit. The terminal device determines that the first time domain resource is the N time units. To be specific, the terminal device determines that a time domain resource corresponding to the first control sub-information #5 is the time unit #2, a time domain resource corresponding to the first control sub-information #6 is the time unit #3, and a time domain resource corresponding to the first control sub-information #7 is the time unit #4.

For example, the payload size of the first control information is 60 bits, and the N time units may include the time unit #1. The terminal device determines a value of N based on a quantity of time units for transmitting the first transport block on the first PUSCH and a maximum latency for transmitting the first control information. For example, the maximum latency may be three time units. In this case, the terminal device may determine that N is 3, the N time units are the time unit #1 to the time unit #3, and the terminal device may evenly divide the first control information into three parts (for example, the three parts may be respectively denoted as first control sub-information #8 to first control sub-information #10). A size of each part is 20 bits, each part corresponds to one time unit, and the size of each part is less than or equal to a threshold of a corresponding time unit. The terminal device determines that the first time domain resource is the N time units. To be specific, the terminal device determines that a time domain resource corresponding to the first control sub-information #8 is the time unit #1, a time domain resource corresponding to the first control sub-information #9 is the time unit #2, and a time domain resource corresponding to the first control sub-information #10 is the time unit #3.

For example, the payload size of the first control information is 60 bits, and the N time units may not include the time unit #1. The terminal device determines the value of N based on the quantity of time units for transmitting the first transport block on the first PUSCH and the maximum latency for transmitting the first control information. For example, the maximum latency may be three time units. In this case, the terminal device may determine that N is 2, and the N time units are the time unit #2 and the time unit #3. The terminal device may evenly divide the first control information into two parts (for example, the two parts may be respectively denoted as first control sub-information #11 and first control sub-information #12). A size of each part is 30 bits, each part corresponds to one time unit, and the size of each part is less than or equal to a threshold of a corresponding time unit. The terminal device determines that the first time domain resource is the N time units. To be specific, the terminal device determines that a time domain resource corresponding to the first control sub-information #11 is the time unit #2, and a time domain resource corresponding to the first control sub-information #12 is the time unit #3.

In a possible implementation, the N parts into which the terminal device divides the first control information may be uneven, and the N parts are in a one-to-one correspondence with the N time units. However, it needs to be ensured that a size of each part in the N parts is less than or equal to a threshold of a corresponding time unit.

In a possible implementation, only a part of the first control information can be sent in the N time units determined by the terminal device, and all the first control information cannot be sent. The terminal device may discard a part that cannot be sent in the first control information.

In a possible implementation, there is one time unit (denoted as a time unit #n) in the N time units determined by the terminal device, a time domain resource for transmitting second control information on the first PUSCH conflicts in the time unit #n with a time domain resource for transmitting first control sub-information #n on the first PUSCH. The second control information may be control information originally transmitted on the first PUCCH or the second PUCCH. In this case, the terminal device determines, based on a relationship between a threshold #n corresponding to the time unit #n and a sum of a payload size of the first control sub-information #n and a payload size of the second control information, the time domain resource for transmitting the first control sub-information #n. When the sum of the payload size of the first control sub-information #n and the payload size of the second control information is less than or equal to the threshold #n, the terminal device determines that the time domain resource for transmitting the first control sub-information #n is the time unit #n. When the sum of the payload size of the first control sub-information #n and the payload size of the second control information is greater than the threshold #n, the terminal device discards the first control sub-information #n.

According to the solution of this application, when a time domain resource for transmitting the first control information conflicts with a time domain resource for transmitting the first transport block, the terminal device may divide the first control information into a plurality of parts, and send the plurality of parts in a plurality of time units, so that transmission of information bits in the first transport block is not affected.

### Manner 5:

The first control information includes first-type control information and second-type control information.

For the first-type control information included in the first control information, the terminal device determines that a time domain resource for transmitting the first-type control information is the time unit #1. Because the first-type control information is time-sensitive, the first-type control information may be sent in time by using the solution in this application.

For the second-type control information included in the first control information, the terminal device may discard the second-type control information.

Alternatively, without generating a first result, the terminal device sends a part of the second-type control information on the first PUSCH by occupying the time unit #1, and discards a remaining part of the second-type control information.

Alternatively, when a payload size of the second-type control information is less than or equal to a second threshold, the terminal device determines that a time domain resource for transmitting the second-type control information is a second time unit. The second time unit is a time unit after the time unit #1. A definition of the second threshold is the same as that described above.

Alternatively, the terminal device determines N thresholds. The N thresholds correspond to the N time units. Definitions of the N thresholds are the same as those described above, and N is a positive integer greater than or equal to 2. The terminal device divides the second-type control information into N parts based on the N thresholds. The N parts are in a one-to-one correspondence with the N time units, and a size of each of the N parts is less than or equal to a threshold of a corresponding time unit. The terminal device determines that the time domain resource for transmitting the second-type control information is the N time units. Each of the N time units is used for transmitting a part of the second-type control information, and the first result is not generated when the terminal device transmits the second-type control information in the N time units of the first PUSCH. It should be understood that different parts of the second-type control information are transmitted in each time unit.

According to the solution of this application, when the time domain resource for transmitting the first control information conflicts with the time domain resource for transmitting the first transport block, and the first control information includes the first-type control information and the second-type control information, the terminal device sends the first-type control information by occupying the conflicting time domain resource, and the terminal device may discard or delay sending the second-type control information, or divide the second-type control information into a plurality of parts for sending in a plurality of time units, to reduce impact of the first control information on transmission of information bits in the first transport block to the greatest extent.

### Manner 6:

When the time domain resource for transmitting the second control information on the first PUSCH conflicts in the second time unit with the time domain resource for transmitting the first control information on the first PUSCH, the terminal device determines, based on a relationship between the second threshold and a sum of the payload size of the first control information and the payload size of the second control information, the first time domain resource for transmitting the first control information. A definition of the second threshold is the same as that described above.

When the sum of the payload size of the first control information and the payload size of the second control information is less than or equal to the second threshold, the terminal device determines that the first time domain resource is the second time unit. To be specific, the terminal device sends the first control information and the second control information on the first PUSCH by occupying a part of the second time unit. It should be understood that the first control information may be sent before or after the second control information. This is not limited in this application.

For example, under the condition of the foregoing assumption, a maximum quantity of bits of the first control information that can be sent by the terminal device by reusing the time unit #2 on the first PUSCH is 100 bits. If the payload size of the first control information is 50 bits, the payload size of the second control information is 20 bits, and the sum of the payload size of the first control information and the payload size of the second control information is less than 100 bits, the second time unit may be the time unit #2.

When the sum of the payload size of the first control information and the payload size of the second control information is greater than the second threshold, the terminal device may discard the first control information.

Alternatively, when the sum of the payload size of the first control information and the payload size of the second control information is greater than the second threshold, and the payload size of the first control information is less than or equal to the second threshold, the terminal device determines that the time domain resource for transmitting the first control information is the second time unit. When the payload size of the second control information is less than or equal to a third threshold, the terminal device determines that the time domain resource for transmitting the second control information is a third time unit. The third time unit is a time unit after the second time unit.

Alternatively, when the sum of the payload size of the first control information and the payload size of the second control information is greater than the second threshold, and the payload size of the first control information is less than or equal to the third threshold, the terminal device determines that the time domain resource for transmitting the first control information is the third time unit.

The third threshold is a maximum quantity of bits of the first control information that can be sent by the terminal device in the third time unit of the first PUSCH without generating the first result.

### Manner 7:

The time domain resource for transmitting the second control information on the first PUSCH conflicts in the second time unit with the time domain resource for transmitting the first control information on the first PUSCH, and the first control information includes the first-type control information and the second-type control information.

In this case, the terminal device determines that the time domain resource for transmitting the first-type control information is the first time unit.

When a sum of the payload size of the second-type control information and the payload size of the second control information is less than or equal to the second threshold, the terminal device determines that the time domain resource for transmitting the second-type control information is the second time unit.

When the sum of the payload size of the second-type control information and the payload size of the second control information is greater than the second threshold, the terminal device may discard the second-type control information.

Alternatively, when the sum of the payload size of the second-type control information and the payload size of the second control information is greater than the second threshold, and the payload size of the second-type control information is less than or equal to the second threshold, the terminal device determines that the time domain resource for transmitting the second-type control information is the second time unit. When the payload size of the second control information is less than or equal to a third threshold, the terminal device determines that the time domain resource for transmitting the second control information is the third time unit. The third time unit is a time unit after the second time unit.

Alternatively, when the sum of the payload size of the second-type control information and the payload size of the second control information is greater than the second threshold, and the payload size of the second-type control information is less than or equal to the third threshold, the terminal device determines that the time domain resource for transmitting the second-type control information is the third time unit.

Definitions of the second threshold and the third threshold are the same as those described above. Details are not described herein again.

S202: The access network device determines, based on the relationship between the payload size of the first control information and the first threshold, a first time domain resource that is on the first PUSCH and that carries the first control information.

When the payload size of the first control information is less than or equal to the first threshold, the access network device determines that the first time domain resource is the time unit #1.

The following describes how the access network device determines the first time domain resource when the payload size of the first control information is greater than the first threshold.

### Manner 8:

Corresponding to Manner 1 in S201, the access network device determines that the time domain resource that is on the first PUSCH and that carries the first control information does not exist.

### Manner 9:

Corresponding to Manner 2 in S201, the access network device determines that the time unit #1 of the first PUSCH is used for carrying a part of the first control information, and does not carry a time domain resource of a remaining part of the first control information.

### Manner 10:

Corresponding to Manner 3 in S201, when the size of the first control information is less than or equal to the second threshold, the access network device determines that the first time domain resource is the second time unit.

### Manner 11:

Corresponding to Manner 4 in S201, the access network device determines N thresholds, and the N thresholds correspond to the N time units. The access network device divides the first control information into N parts based on the N thresholds. The N parts are in a one-to-one correspondence with the N time units, and a size of each of the N parts is less than or equal to a threshold of a corresponding time unit. The access network device determines that the first time domain resource carrying the first control information is the N time units.

Each of the N time units is used for carrying a part of the first control information, and the first result is not generated when the terminal device transmits the first control information in the N time units of the first PUSCH. It should be understood that each time unit carries different parts of the first control information.

### Manner 12:

Corresponding to Manner 5 in S201, the first control information includes the first-type control information and the second-type control information.

For the first-type control information included in the first control information, the access network device determines that the time domain resource carrying the first-type control information is the time unit #1.

For the second-type control information included in the first control information, the access network device determines that the time domain resource carrying the second-type control information does not exist.

Alternatively, without generating the first result, the access network device determines that the time unit #1 of the first PUSCH is used for carrying a part of the second-type control information, and does not carry a time domain resource that carries a remaining part of the second-type control information.

Alternatively, when the payload size of the second-type control information is less than or equal to the second threshold, the access network device determines that the time domain resource carrying the second-type control information is the second time unit.

Alternatively, the access network device determines the N thresholds. The N thresholds correspond to the N time units. The access network device divides the second-type control information into N parts based on the N thresholds. The N parts are in a one-to-one correspondence with the N time units, and a size of each of the N parts is less than or equal to a threshold of a corresponding time unit. The access network device determines that the first time domain resource carrying the second-type control information is the N time units.

Each of the N time units is used for carrying a part of the second-type control information, and the first result is not generated when the terminal device transmits the second-type control information in the N time units of the first PUSCH. It should be understood that each time unit carries different parts of the second-type control information.

### Manner 13:

Corresponding to Manner 6 in S201, a time domain resource that is on the first PUSCH and that carries the second control information conflicts in the second time unit with a time domain resource that is on the first PUSCH and that carries the first control information. In this case, the access network device determines, based on a relationship between the second threshold and the sum of the payload size of the first control information and the payload size of the second control information, the first time domain resource carrying the first control information.

When the sum of the payload size of the first control information and the payload size of the second control information is less than or equal to the second threshold, the access network device determines that the first time domain resource carrying the first control information is the second time unit.

When the sum of the payload size of the first control information and the payload size of the second control information is greater than the second threshold, the access network device determines that the time domain resource carrying the first control information does not exist.

Alternatively, when the sum of the payload size of the first control information and the payload size of the second control information is greater than the second threshold, and the payload size of the first control information is less than or equal to the second threshold, the access network device determines that the time domain resource carrying the first control information is the second time unit. When the payload size of the second control information is less than or equal to the third threshold, the access network device determines that the time domain resource carrying the second control information is the third time unit.

Alternatively, when the sum of the payload size of the first control information and the payload size of the second control information is greater than the second threshold, and the payload size of the first control information is less than or equal to the third threshold, the access network device determines that the time domain resource carrying the first control information is the third time unit.

### Manner 14:

Corresponding to Manner 7 in S201, a time domain resource that is on the first PUSCH and that carries the second control information conflicts in the second time unit with a time domain resource that is on the first PUSCH and that carries the first control information, and the first control information includes the first-type control information and the second-type control information.

In this case, the access network device determines that the time domain resource carrying the first-type control information is the time unit #1.

When the sum of the payload size of the second-type control information and the payload size of the second control information is less than or equal to the second threshold, the access network device determines that the time domain resource carrying the second-type control information is the second time unit.

When the sum of the payload size of the second-type control information and the payload size of the second control information is greater than the second threshold, the access network device determines that the time domain resource carrying the second-type control information does not exist.

Alternatively, when the sum of the payload size of the second-type control information and the payload size of the second control information is greater than the second threshold, and the payload size of the second-type control information is less than or equal to the second threshold, the access network device determines that the time domain resource carrying the second-type control information is the second time unit. When the payload size of the second control information is less than or equal to the third threshold, the access network device determines that the time domain resource carrying the second control information is the third time unit.

Alternatively, when the sum of the payload size of the second-type control information and the payload size of the second control information is greater than the second threshold, and the payload size of the second-type control information is less than or equal to the third threshold, the access network device determines that the time domain resource carrying the second-type control information is the third time unit.

Definitions of the second threshold and the third threshold are the same as those described above. Details are not described herein again.

According to the solution of this application, when the time domain resource that is on the first PUCCH and that carries the first control information conflicts in the first time unit with a time domain resource that is on the first PUSCH and that carries the first transport block, the access network device determines a relationship between the first control information and the first threshold, and determines, based on a determined result, the first time domain resource carrying the first control information, so that the first control information sent by the terminal device can be correctly received.

S203: The terminal device transmits the first control information on the first time domain resource of the first PUSCH.

S204: The access network device receives the first control information on the first time domain resource of the first PUSCH.

According to the solution provided in this application, impact of the first control information on transmission of the information bits in the first transport block can be reduced to the greatest extent, so that all information bits in the first transport block can be transmitted, and transmission performance of the transport block on the PUSCH can be better ensured.

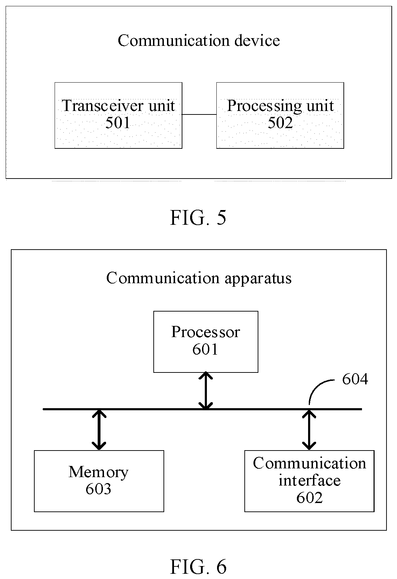

According to the foregoing method, FIG. 5 shows a communication device according to an embodiment of this application. The communication device includes a transceiver unit 501 and a processing unit 502. The transceiver unit 501 may be configured to implement receiving and sending functions in the method embodiment. Other functions in the method embodiment may be implemented by using the processing unit 502. The transceiver unit may be implemented by using an input interface and an output interface in a data processing chip. Sending and receiving in the method embodiment respectively correspond to output and input in the chip. The transceiver unit 501 may be further divided into a receiving unit and a sending unit. The receiving unit may be configured to implement a receiving function in the method embodiment, and the sending unit may be configured to implement a sending function in the method embodiment. The receiving unit may be implemented by using an output interface in the data processing chip, and the sending unit may be implemented by using an input interface of the data processing chip. In addition, the transceiver unit and the processing unit may be implemented by using a same chip. This is not limited in this application. It should be understood that the transceiver unit 501 in this embodiment of this application may be further implemented by a transceiver (including a transmitter and a receiver) or a transceiver-related circuit component, and the processing unit 502 may be further implemented by a processor or a processor-related circuit component (or referred to as a processing circuit).

For example, the communication device may be a communication apparatus device, or may be a chip used in the communication apparatus device, or another combined device or part that has a function of the communication apparatus device.

For example, when the communication device is a terminal device, the transceiver unit 501 and the processing unit 502 can support actions completed by the terminal device in the foregoing method example. For example, the transceiver unit 501 may complete transmitting the first control information in the foregoing method embodiment and another process in the technical solution described in this specification. The processing unit 502 may complete determining the first time domain resource for transmitting the first control information and another process in the technical solution described in this specification.

For example, when the communication device is an access network device, the transceiver unit 501 and the processing unit 502 can support actions completed by the access network device in the foregoing method example. For example, the transceiver unit 501 may complete receiving the first control information in the foregoing method embodiment and another process in the technical solution described in this specification. The processing unit 502 may complete determining the first time domain resource for receiving the first control information and another process in the technical solution described in this specification.

An embodiment of this application further provides a communication apparatus. As shown in FIG. 6, the communication apparatus includes a processor 601, a communication interface 602, and a memory 603. The processor 601, the communication interface 602, and the memory 603 may be connected to each other by using a bus 606. The bus 606 may be a peripheral component interconnect (peripheral component interconnect, PCI) bus, an extended industry standard architecture (extended industry standard architecture, EISA) bus, or the like. The bus 606 may be classified into an address bus, a data bus, a control bus, and the like. For ease of indication, the bus is indicated by using only one bold line in FIG. 6. However, it does not indicate that there is only one bus or only one type of bus. The processor 601 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The memory 603 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

The processor 601 is configured to implement a data processing operation of the communication apparatus. The communication interface 602 is configured to implement a receiving and sending operation of the communication apparatus.

For example, when the communication apparatus is a terminal device, the processor 601, the communication interface 602, and the memory 603 can support actions completed by the terminal device in the foregoing method example.

For example, when the communication apparatus is an access network device, the processor 601, the communication interface 602, and the memory 603 can support actions completed by the access network device in the foregoing method example.

The technical solutions of embodiments of this application may be applied to various communication systems, such as a Global System Of Mobile Communication (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a Universal Mobile Telecommunications System (universal mobile telecommunications system, UMTS), a worldwide interoperability for microwave access (worldwide interoperability for microwave access, WiMAX) communication system, a future 5^{th} generation (5th generation, 5G) system, or a new radio (new radio, NR) system.

The terminal device in embodiments of this application may also be referred to as user equipment, an access terminal, a subscriber unit, a subscriber station, a mobile station, a mobile console, a remote station, a remote terminal, a mobile device, a user terminal, a terminal, a wireless communication device, a user agent, a user apparatus, or the like. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). This is not limited in embodiments of this application.

The network device in embodiments of this application may be a device configured to communicate with the terminal device. The network device may be a base transceiver station (base transceiver station, BTS) in a Global System Of Mobile Communication (global system of mobile communication, GSM) system or a code division multiple access (code division multiple access, CDMA), may be a base station (base station, BS) in a wideband code division multiple access (wideband code division multiple access, WCDMA) system, may be an evolved NodeB (evolved nodeB, eNB or eNodeB) in an LTE system, or may be a radio controller in a scenario of a cloud radio access network (cloud radio access network, CRAN). Alternatively, the network device may be a relay node, an access point, a vehicle-mounted device, a wearable device, a network device in a future 5G network, a network device in a future evolved PLMN network, or the like. This is not limited in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for transmitting control information, comprising:
when a time domain resource for transmitting first control information on a first uplink control channel PUCCH conflicts in a first time unit with a time domain resource for transmitting a first transport block on a first uplink shared channel PUSCH, determining, based on a relationship between a payload size of the first control information and a first threshold, a first time domain resource for transmitting the first control information, wherein
the first threshold is a maximum quantity of bits of the first control information that can be transmitted by a terminal device in the first time unit of the first PUSCH without generating a first result, and the first result is that some information bits in the first transport block cannot be transmitted; and
transmitting the first control information on the first time domain resource of the first PUSCH.

2. The method according to claim 1, wherein when the payload size of the first control information is less than or equal to the first threshold, the first time domain resource is the first time unit.

3. The method according to claim 1, wherein when the payload size of the first control information is greater than the first threshold, and the payload size of the first control information is less than or equal to a second threshold, the first time domain resource is a second time unit, wherein the second time unit is a time unit after the first time unit; and
the second threshold is a maximum quantity of bits of the first control information that can be sent by the terminal device in the second time unit of the first PUSCH without generating the first result.

4. The method according to claim 1, wherein when the payload size of the first control information is greater than the first threshold, the first time domain resource is N time units of the first PUSCH, wherein N is a positive integer greater than or equal to 2; and
each of the N time units is used for transmitting a part of the first control information, and the first result is not generated when the terminal device transmits the first control information in the N time units.

5. The method according to claim 1, wherein
when the payload size of the first control information is greater than the first threshold, and the first control information comprises first-type control information and second-type control information,
the first time domain resource is the first time unit, the first time unit is a time domain resource for transmitting the first-type control information, and the method further comprises: discarding the second-type control information;
or
when a payload size of the second-type control information is less than or equal to a second threshold, the first time domain resource is the first time unit and a second time unit, the first time unit is a time domain resource for transmitting the first-type control information, and the second time unit is a time domain resource for transmitting the second-type control information, wherein the second time unit is a time unit after the first time unit, and the second threshold is a maximum quantity of bits of the first control information that can be sent by the terminal device in the second time unit of the first PUSCH without generating the first result;
or
the first time domain resource is the first time unit and N time units, the first time unit is a time domain resource for transmitting the first-type control information, the N time units are time domain resources for transmitting the second-type control information, wherein N is a positive integer greater than or equal to 2, each of the N time units is used for transmitting a part of the second-type control information, and the first result is not generated when the terminal device transmits the second-type control information in the N time units of the first PUSCH; and
the first-type control information comprises at least one of hybrid automatic repeat request-acknowledgement/negative acknowledgement HARQ-ACK/NACK information and scheduling request SR information, and the second-type control information comprises channel state information CSI.

6. The method according to claim 4 or 5, wherein
a value of N is associated with one or more of the following parameters:
a quantity of time units for transmitting the first transport block on the first PUSCH; and
a maximum latency for transmitting the first control information.

7. The method according to claim 1, wherein
when the payload size of the first control information is greater than the first threshold, and a time domain resource for transmitting second control information on the first PUSCH conflicts in a second time unit with a time domain resource for transmitting the first control information on the first PUSCH, the determining a first time domain resource for transmitting the first control information comprises:
when a sum of the payload size of the first control information and a payload size of the second control information is less than or equal to a second threshold, determining that the first time domain resource is the second time unit, wherein the second time unit is a time unit after the first time unit; and
when the sum of the payload size of the first control information and the payload size of the second control information is greater than the second threshold, discarding the first control information, wherein
the second threshold is a maximum quantity of bits of the first control information that can be sent by the terminal device in the second time unit of the first PUSCH without generating the first result.

8. The method according to claim 1, wherein
when the payload size of the first control information is greater than the first threshold, a time domain resource for transmitting second control information on the first PUSCH conflicts in a second time unit with a time domain resource for transmitting the first control information on the first PUSCH, and the first control information comprises first-type control information and second-type control information, the determining a first time domain resource for transmitting the first control information comprises:
determining that the first time unit is a time domain resource for transmitting the first-type control information;
when a sum of a payload size of the second-type control information and a payload size of the second control information is less than or equal to a second threshold, determining that the second time unit is a time domain resource for transmitting the second-type control information, wherein the second time unit is a time unit after the first time unit; and
when the sum of the payload size of the second-type control information and the payload size of the second control information is greater than the second threshold, discarding the second-type control information, wherein
the second threshold is a maximum quantity of bits of the first control information that can be transmitted by the terminal device in the second time unit of the first PUSCH without generating the first result, the first-type control information comprises at least one of hybrid automatic repeat request-acknowledgement/negative acknowledgement HARQ-ACK/NACK information and scheduling request SR information, and the second-type control information comprises channel state information CSI.

9. A method for receiving control information, comprising:
when a time domain resource that is on a first uplink control channel PUCCH and that carries first control information conflicts in a first time unit with a time domain resource that is on a first uplink shared channel PUSCH and that carries a first transport block, determining, based on a relationship between a payload size of the first control information and a first threshold, a first time domain resource that is on the first PUSCH and that carries the first control information, wherein
the first threshold is a maximum quantity of bits of the first control information that can be transmitted by a terminal device in the first time unit of the first PUSCH without generating a first result, and the first result is that some information bits in the first transport block cannot be transmitted; and
receiving the first control information on the first time domain resource.

10. The method according to claim 9, wherein when the payload size of the first control information is less than or equal to the first threshold, the first time domain resource is the first time unit.

11. The method according to claim 9, wherein when the payload size of the first control information is greater than the first threshold, and the payload size of the first control information is less than or equal to a second threshold, the first time domain resource is a second time unit, wherein the second time unit is a time unit after the first time unit; and
the second threshold is a maximum quantity of bits of the first control information that can be sent by the terminal device in the second time unit of the first PUSCH without generating the first result.

12. The method according to claim 9, wherein when the payload size of the first control information is greater than the first threshold, the first time domain resource is N time units of the first PUSCH, wherein N is a positive integer greater than or equal to 2; and
each of the N time units is used for carrying a part of the first control information, and the first result is not generated when the terminal device transmits the first control information in the N time units.

13. The method according to claim 9, wherein
when the payload size of the first control information is greater than the first threshold, and the first control information comprises first-type control information and second-type control information,
the first time domain resource is the first time unit, the first time unit is a time domain resource carrying the first-type control information, and the method further comprises: determining that a time domain resource carrying the second-type control information does not exist;
or
when a payload size of the second-type control information is less than or equal to a second threshold, the first time domain resource is the first time unit and a second time unit, the first time unit is a time domain resource carrying the first-type control information, and the second time unit is a time domain resource carrying the second-type control information, wherein the second time unit is a time unit after the first time unit, and the second threshold is a maximum quantity of bits of the first control information that can be sent by the terminal device in the second time unit of the first PUSCH without generating the first result;
or
the first time domain resource is the first time unit and N time units, the first time unit is a time domain resource carrying the first-type control information, the N time units are time domain resources carrying the second-type control information, wherein N is a positive integer greater than or equal to 2, each of the N time units is used for carrying a part of the second-type control information, and the first result is not generated when the terminal device transmits the second-type control information in the N time units of the first PUSCH; and
the first-type control information comprises at least one of hybrid automatic repeat request-acknowledgement/negative acknowledgement HARQ-ACK/NACK information and scheduling request SR information, and the second-type control information comprises channel state information CSI.

14. The method according to claim 12 or 13, wherein
a value of N is associated with one or more of the following parameters:
a quantity of time units for transmitting the first transport block on the first PUSCH; and
a maximum latency for transmitting the first control information.

15. The method according to claim 9, wherein
when the payload size of the first control information is greater than the first threshold, and a time domain resource that is on the first PUSCH and that carries second control information conflicts in a second time unit with a time domain resource that is on the first PUSCH and that carries the first control information, the determining a first time domain resource that is on the first PUSCH and that carries the first control information comprises:
when a sum of the payload size of the first control information and a payload size of the second control information is less than or equal to a second threshold, determining that the second time unit is the first time domain resource, wherein the second time unit is a time unit after the first time unit; and
when the sum of the payload size of the first control information and the payload size of the second control information is greater than the second threshold, determining that a time domain resource carrying the first control information does not exist; wherein
the second threshold is a maximum quantity of bits of the first control information that can be sent by the terminal device in the second time unit of the first PUSCH without generating the first result.

16. The method according to claim 9, wherein
when the payload size of the first control information is greater than the first threshold, a time domain resource that is on the first PUSCH and that carries the second control information conflicts in a second time unit with a time domain resource that is on the first PUSCH and that carries the first control information, and the first control information comprises first-type control information and second-type control information, the determining a first time domain resource that is on the first PUSCH and that carries the first control information comprises:
determining that the first time unit is a time domain resource carrying the first-type control information;
when a sum of a payload size of the second-type control information and a payload size of the second control information is less than or equal to a second threshold, determining that the second time unit is a time domain resource carrying the second-type control information, wherein the second time unit is a time unit after the first time unit; and
when the sum of the payload size of the second-type control information and the payload size of the second control information is greater than the second threshold, determining that the time domain resource carrying the second-type control information does not exist; wherein
the second threshold is a maximum quantity of bits of the first control information that can be transmitted by the terminal device in the second time unit of the first PUSCH without generating the first result, the first-type control information comprises at least one of hybrid automatic repeat request-acknowledgement/negative acknowledgement HARQ-ACK/NACK information and scheduling request SR information, and the second-type control information comprises channel state information CSI.

17. A communication apparatus, comprising a unit or a module configured to perform the method according to any one of claims 1 to 8, or comprising a unit or a module configured to perform the method according to any one of claims 9 to 16.

18. A communication device, comprising a processor and a memory, wherein the processor is configured to execute a computer program or instructions stored in the memory, to enable the communication device to perform the method according to any one of claims 1 to 8; or
to enable the communication device to perform the method according to any one of claims 9 to 16.

19. A computer-readable storage medium, comprising a computer program or instructions, wherein when the computer program or the instructions are run on a computer,
the computer is enabled to perform the method according to any one of claims 1 to 8; and
the computer is enabled to perform the method according to any one of claims 9 to 16.

20. A chip system, comprising at least one processor, configured to execute a computer program or instructions in a memory,
to implement the method according to any one of claims 1 to 8; or
to implement the method according to any one of claims 9 to 16.
